(19) Europäisches Patentamt / European Patent Office / Office européen des brevets

(11) **EP 3 344 518 B1**

(12) **FASCICULE DE BREVET EUROPEEN**

(45) Date de publication et mention de la délivrance du brevet:
**23.10.2019 Bulletin 2019/43**

(21) Numéro de dépôt: **16766027.3**

(22) Date de dépôt: **31.08.2016**

(51) Int Cl.:
*B62D 12/02* [(2006.01)]    *B60D 1/30* [(2006.01)]
*B62D 13/00* [(2006.01)]    *B62D 47/02* [(2006.01)]
*B60K 7/00* [(2006.01)]    *B60D 1/42* [(2006.01)]
*B60D 1/62* [(2006.01)]    *B60W 10/08* [(2006.01)]
*B60W 10/30* [(2006.01)]    *B60W 30/045* [(2012.01)]
*B60D 1/48* [(2006.01)]    *B62D 47/00* [(2006.01)]

(86) Numéro de dépôt international:
**PCT/FR2016/052162**

(87) Numéro de publication internationale:
**WO 2017/037387 (09.03.2017 Gazette 2017/10)**

(54) **PROCÉDÉ DE COMMANDE D'UN CONVOI AUTOMOBILE ROUTIER ET CONVOI AUTOMOBILE ROUTIER**

STRASSENFAHRZEUGKONVOISTEUERUNGSVERFAHREN UND STRASSENFAHRZEUGKONVOI

ROAD VEHICLE CONVOY CONTROL METHOD, AND ROAD VEHICLE CONVOY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2015 FR 1558112**

(43) Date de publication de la demande:
**11.07.2018 Bulletin 2018/28**

(73) Titulaire: **Commissariat à l'énergie atomique et aux énergies alternatives
75015 Paris (FR)**

(72) Inventeurs:
• **CERVANTES, Valery**
  **38000 Grenoble (FR)**
• **LABORDE, Jérôme**
  **69003 Lyon (FR)**

(74) Mandataire: **Colombo, Michel
Innovation Competence Group
310, avenue Berthelot
69372 Lyon Cedex 08 (FR)**

(56) Documents cités:
**US-A- 4 688 818        US-A1- 2013 079 980
US-A1- 2015 051 795**

**Description**

L'invention concerne un procédé de commande d'un convoi automobile routier. L'invention concerne également un support d'enregistrement d'informations pour la mise en oeuvre de ce procédé de commande. L'invention concerne enfin un convoi automobile routier commandable.

On connaît des convois automobiles routiers qui sont formés d'une pluralité de véhicules attelés entre eux et apte à se déplacer en rotation en lacet les uns par rapport aux autres. On connaît notamment des trains routiers ou des systèmes de transport urbain tel que des autobus poly-articulés. Un problème avec de tels convois est qu'ils peuvent présenter un mouvement de louvoiement (« sway » en langue anglaise) non contrôlé lorsqu'ils circulent. Ce louvoiement se traduit par des oscillations latérales, c'est-à-dire perpendiculaire à la direction de déplacement du convoi. Un tel louvoiement peut d'une part engendrer une perte de contrôle du véhicule, et d'autre part est dangereux pour les autres véhicules et doit être évité.

Un freinage dissipatif est un freinage où l'énergie cinétique des roues est convertie en chaleur. Il s'agit typiquement d'un freinage à l'aide de plaquette de frein.

L'utilisation de l'actionneur en plus des freins présente l'avantage de limiter l'amplitude du couple de freinage à exercer sur les roues pour amortir le mouvement de louvoiement. En effet, ce procédé de commande répartit l'effort pour stabiliser le convoi entre les roues freinées et l'actionneur commandable de l'articulation commandé en cohérence avec les roues. Ainsi, la mise en oeuvre répétée du procédé de commande de la demande US-4688818-A1 permet d'amortir le mouvement de louvoiement tout en ralentissant le convoi de façon moins importante que si seuls les freins étaient utilisés pour amortir ce mouvement de louvoiement. Cela permet aussi de limiter les risques de perte d'adhérence d'une roue puisque le couple de freinage est moindre. Toutefois, puisque la mise en oeuvre du procédé de commande de la demande US-4688818-A1 ralentit le convoi, il ne peut pas être mis en oeuvre en permanence et ne doit être utilisé qu'occasionnellement. Typiquement, ce procédé est mis en oeuvre seulement si l'amplitude du mouvement de louvoiement dépasse un seuil prédéterminé. Dès lors, le conducteur du convoi doit s'accommoder d'un faible mouvement de louvoiement, c'est-à-dire d'un mouvement de louvoiement dont l'amplitude reste inférieure à ce seuil prédéterminé.

De l'état de la technique est également connu de :

- US2013/079980A1, et
- US2015/051795A1.

Il existe donc un besoin pour un procédé de commande d'un convoi routier automobile qui permette d'amortir le mouvement de louvoiement tout en ralentissant encore moins le convoi.

L'invention concerne donc un procédé de commande d'un convoi automobile routier conforme à la revendication 1.

La commande des machines électriques des première et seconde roues d'un train de roues pour accélérer la première roue sans freiner la seconde roues de ce train, permet de créer un couple sur l'articulation sans freiner les roues. Par conséquent, le procédé de commande revendiqué permet d'amortir le mouvement de louvoiement aussi efficacement que le procédé de commande de la demande US-4688818-A1 tout en freinant encore moins le convoi lors de la mise en oeuvre de ce procédé. Il est dès lors possible de mettre en oeuvre en permanence le procédé de commande revendiqué sans que cela conduise à ralentir en permanence ce convoi.

Des modes de réalisation de l'invention peuvent présenter en plus les avantages suivants :

- Dans le procédé revendiqué, l'absence de freinage des roues du convoi élimine le risque de blocage d'une ou plusieurs de ces roues. Le risque de perte d'adhérence d'une roue est également limité. Enfin, le procédé de commande est simplifié.

Selon un autre aspect, l'invention concerne également un support d'enregistrement d'informations comportant des instructions pour la mise en oeuvre des étapes a) et b) du procédé revendiqué lorsque ces instructions sont exécutées par un calculateur électronique.

Selon un autre aspect, l'invention concerne également un convoi automobile routier conforme à la revendication 11.

L'invention sera mieux comprise à la lecture de la description qui va suivre, donnée uniquement à titre d'exemple non limitatif et faite en se référant aux dessins sur lesquels :

- la figure 1A est une illustration schématique d'un convoi automobile routier selon une vue latérale ;
- la figure 1B est une illustration schématique du convoi de la figure 1A selon une vue du dessus simplifiée ;
- la figure 2 est une illustration schématique d'un véhicule du convoi de la figure 1A ;
- la figure 3 est un ordinogramme d'un procédé de commande du convoi de la figure 1A ;

- la figure 4 est une illustration de l'évolution au cours du temps d'un angle de braquage d'un véhicule de tête du convoi de la figure 1A en réponse à une commande d'un utilisateur de ce véhicule ;
- les figures 5 et 7 sont des illustrations de l'évolution au cours du temps d'un angle d'articulation d'un véhicule suiveur du convoi de la figure 1A, en réponse au braquage illustré à la figure 4, respectivement, sans et avec application du procédé de la figure 3 ;
- la figure 6 est un exemple d'un signal de commande délivré par un dispositif de commande du convoi de la figure 1B pour limiter des oscillations de l'angle d'articulation visibles sur la figure 5 ;
- la figure 8 est une illustration d'un autre mode de réalisation du convoi des figures 1A et 1B ;
- la figure 9 est un ordinogramme d'un autre mode de réalisation du procédé de la figure 3.

Dans ces figures, les mêmes références sont utilisées pour désigner les mêmes éléments.

Dans la suite de cette description, les caractéristiques et fonctions bien connues de l'homme du métier ne sont pas décrites en détails.

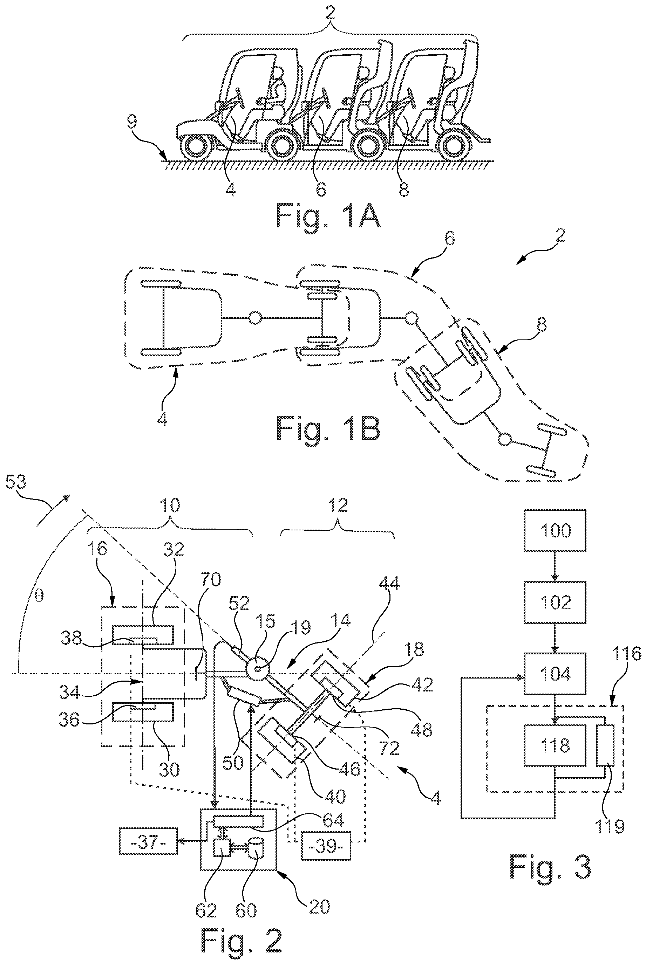

Les figures 1A et 1B représentent schématiquement un exemple d'un convoi 2 automobile routier. Ce convoi 2 comporte :

- un véhicule 4 de tête, situé en tête du convoi 2, et
- une pluralité de véhicules, dits véhicules suiveurs, attelés deux à deux l'un derrière l'autre à l'arrière du véhicule 4. L'un de ces véhicules suiveurs est attelé directement à l'arrière du véhicule 4.

Le convoi 2 et le véhicule 4 sont similaires à ceux décrits dans la demande WO2O14/135310. Ainsi, par la suite, seuls les détails techniques nécessaires à la compréhension de l'invention sont décrits en détail. Pour simplifier, le convoi 2 ne comporte que trois véhicules : le véhicule 4 et deux véhicules suiveurs attelés l'un derrière l'autre et à l'arrière du véhicule 4, comme cela sera décrit plus en détail dans ce qui suit. Ces véhicules suiveurs portent les références, respectivement, 6 et 8. Les véhicules 6 et 8 sont ici identiques au véhicule 4. Aussi, seul ce dernier sera décrit en détail.

Le convoi 2 est apte à se déplacer le long d'un plan de roulement 9. Le plan 9 est défini comme étant le plan passant par les surfaces de contact entre les roues du véhicule 4 et la route sur laquelle circule ce véhicule. Le plan 9 est ici horizontal.

La figure 2 représente plus en détail le véhicule 4. Le véhicule 4 comporte ici :

- un châssis comportant des parties de châssis avant 10 et arrière 12 ;
- une articulation 14 entre les parties 10 et 12 ;
- des trains de roues avant 16 et arrière 18, fixés respectivement sur les parties 10 et 12 ;
- un dispositif 20 de commande de l'articulation 14.

Sur la figure 2, le dispositif 20 et différents autres organes de commande sont représentés, pour améliorer la lisibilité de la figure, comme étant déportés sur un côté du véhicule 4. Toutefois, dans la réalité, il n'en est rien et le dispositif 20 comme tous les autres organes de commande sont logés à l'intérieur du véhicule 4.

Le train 16 comporte une roue gauche 30 et une roue droite 32, alignées l'une par rapport à l'autre autour d'un axe transversal 34.. Les roues 30 et 32 sont aptes à se mouvoir en rotation autour d'un axe de rotation de cette roue. Les roues 30 et 32 sont généralement alignées perpendiculairement à l'axe 34 lorsqu'elles ne sont pas braquées. Leurs axes de rotation respectifs sont dans ce cas alignés avec cet axe 34. L'axe 34 est ici solidaire sans degré de liberté de la partie 10.

Ici, la partie 10 comporte un dispositif de braquage (« steering » en langue anglaise) des roues 30 et 32. Pour simplifier la figure 2, ce dispositif de braquage n'y est pas dessiné. Ce dispositif de braquage est commandable par un conducteur du véhicule 4 pour modifier un angle de braquage $\varphi$ des roues 30 et 32 afin de diriger le véhicule 4. Par exemple, ce dispositif de braquage est celui décrit dans la demande internationale WO2014/135310 en référence à la figure 10.

L'angle de braquage $\varphi$ est ici défini comme étant l'angle aigu entre le plan vertical perpendiculaire à l'axe de roulement de cette roue et le plan vertical qui contient un axe longitudinal de la partie 10.

On définit l'axe longitudinal de la partie 10 comme étant un axe solidaire sans degré de liberté de la partie 10 et qui est aligné avec l'axe longitudinal du véhicule 4 lorsque les parties 10 et 12 sont alignées entre elles et que les roues 30, 32 ne sont pas braquées. L'axe longitudinal de la partie 10 est ici un axe parallèle au plan 9 de roulement, perpendiculaire à l'axe 34 et qui passe par le centre géométrique de cet axe 34. Le centre géométrique de l'axe 34 est ici situé à équidistance des centres respectifs des roues 30, 32. L'axe de rotation respectif de chacune de ces roues 30, 32 passe par le centre de cette roue.

Chaque roue 30, 32 comporte une machine électrique commandable apte à fonctionner en tant que moteur et, en alternance, en tant que génératrice. Lorsqu'elle fonctionne en tant que moteur, elle entraîne cette roue en rotation pour propulser le véhicule 4. Les machines des roues 30 et 32 portent respectivement les références 36 et 38. Par exemple, les machines 36 et 38 sont des moteur-roues intégrés au sein des moyeux respectifs des roues 30, 32. Il s'agit par exemple de machines électriques à courant continu, telles que des machines à collecteur à excitation en série. Chaque machine 36, 38 est ici apte à fournir une puissance supérieure ou égale à 2kW ou à 7,5kW ou à 15kW.

Les machines 36 et 38 sont chacune aptes à fournir un effort de freinage régénératif (aussi nommé freinage à récupération) lorsqu' elles fonctionnent en génératrice et que le véhicule 4 se déplace. Ainsi, chaque machine 36, 38 est apte, en réponse à un signal de commande, à convertir en énergie électrique une partie de l'énergie cinétique de rotation de la roue respective à laquelle elle appartient. Cela ralentit la rotation de la roue et freine le véhicule 4.

Par exemple, dans une machine électrique à courant continu et à excitation en série, le freinage régénératif est obtenu en modifiant la tension électrique induite dans la machine pour que le courant électrique induit, et donc le sens de transfert de la puissance, change de sens.

Les machines 36, 38 sont raccordées à un circuit de commande 37 du véhicule 4 qui commande le fonctionnement de ces machines indépendamment l'une de l'autre. Par exemple, le circuit 37 comporte des rhéostats commandables qui permettent de commander le courant d'excitation des machines 36 et 38 indépendamment l'une de l'autre. Le circuit 37 est ici apte à commander les machines 36, 38 pour que les roues 30, 32 tournent à des vitesses différentes et, notamment, pour exercer le freinage régénératif. Pour simplifier la figure 2, le raccordement des machines au circuit 37 n'est pas représenté.

Chacune des machines 36, 38 est ici également raccordé électriquement à un circuit de puissance 39 du véhicule 4 apte à fournir de l'énergie électrique pour alimenter cette machine. Ce circuit 39 comporte par exemple un dispositif de stockage d'énergie électrique, tel qu'une batterie d'accumulateurs électriques rechargeables. En particulier, ce circuit 39 est ici apte à collecter et à stocker l'énergie générée par l'une quelconque des machines 36, 38 lors d'un freinage régénératif des roues 30 et/ou 32.

Avantageusement, le train 16 comporte également des freins mécaniques commandables pour freiner les roues 30 et 32. Ces freins mécaniques exercent, lorsqu'ils sont commandés à cette fin, par exemple par un utilisateur du véhicule 4, un freinage dissipatif sur une roue en dissipant sous forme d'énergie thermique au moins une partie de l'énergie cinétique de rotation de cette roue. Par exemple, il s'agit de freins à tambour ou de freins à mâchoire ou de freins à disques.

Le train 18 comporte des roues gauche 40 et droite 42 alignées sur un axe transversal 44. Le train 18 est ici identique au train 16, sauf que les roues 40 et 42 ne peuvent ici pas être braquées. Les machines électriques des roues 40 et 42 portent respectivement les références 46 et 48. Les machines 46 et 48 sont également raccordés aux circuits 37 et 39.

L'articulation 14 autorise un déplacement en rotation des parties 10 et 12 l'une par rapport à l'autre autour d'un axe 19 de rotation perpendiculaire au plan 9. Ici, l'axe 19 est vertical. Par exemple, l'articulation 14 comporte une liaison pivot 15 raccordant mécaniquement les parties 10 et 12 et présentant comme axe de rotation l'axe 19. Par exemple, l'articulation 14 est celle décrite dans la demande internationale WO2O14/135310.

L'articulation 14 comporte en outre un actionneur 50 commandable. L'actionneur 50 relie mécaniquement les parties 10 et 12 l'une à l'autre. Cet actionneur 50 est capable de verrouiller l'articulation 14 et de freiner la rotation l'une par rapport à l'autre des parties 10 et 12 autour de l'axe 19. En particulier, l'actionneur 50 est apte à exercer un moment de freinage réglable, autour de l'axe 19, en réponse à un signal de commande ici émis par le dispositif 20. Par contre, l'actionneur 50 est incapable de déplacer les parties 10 et 12 l'une par rapport à l'autre.

Par exemple, l'actionneur 50 est un vérin hydraulique à coefficient d'amortissement variable, réglable en fonction d'un signal de commande. Ce vérin comporte ici un réservoir d'un fluide tel que de l'huile, dans lequel un piston est monté coulissant. Ce piston partage, de façon connue, le réservoir en deux parties. Ces deux parties sont reliées fluidiquement l'une à l'autre par une conduite sur laquelle se trouve un réducteur de débit variable, tel qu'une électrovanne. Par exemple, cette électrovanne comporte deux vannes de pression proportionnelle (« proportional pressure relief valve » an anglais) montées en sens opposé avec des claplets anti-retour. Ce réducteur est commandable pour modifier ce débit, ce qui modifie le coefficient d'amortissement du vérin. Ce dispositif est donc beaucoup plus simple que le dispositif actif impliquant la mise en oeuvre d'une pompe hydraulique décrit dans le brevet US4688818.

Ainsi, un effort exercé sur le piston peut être sélectivement plus ou moins atténué en fonction de la valeur de coefficient d'amortissement choisie. Ici, l'actionneur 50 permet d'atténuer le mouvement d'oscillation des parties 10 et 12. Dès lors, l'utilisation de l'actionneur 50 consomme très peu d'énergie électrique. Ici, l'énergie consommée par l'actionneur 50 sert uniquement à régler des coefficients de frottement.

Ici, l'articulation 14 comporte en outre un capteur 52 d'angle qui est apte à mesurer l'angle d'articulation, noté $\theta$, entre les parties 10 et 12. Par exemple, cet angle $\theta$ est défini comme le plus petit angle orienté, mesuré dans un plan parallèle au plan 9, entre les axes longitudinaux des parties 10 et 12. Le sens positif d'orientation de cet angle $\theta$ est ici illustré par la flèche 53. Sur l'exemple de la figure 2, l'angle $\theta$ présente donc une valeur positive.

Ce capteur 52 est ici raccordé à une interface de collecte de données du dispositif 20.

Le dispositif 20 est notamment apte à mesurer une oscillation de l'angle θ autour d'une consigne θ$_0$ d'angle d'articulation grâce aux données fournies par le capteur 52. En réponse, le dispositif 20 commande l'actionneur 50 pour qu'il exerce sur l'articulation 14 un moment en opposition par rapport aux oscillations mesurées pour amortir ces oscillations.

Par exemple, le dispositif 20 comporte :

- un support 60 d'enregistrement d'informations ;
- un calculateur 62 électronique programmable ;
- une interface 64 d'échange de données.

Le support 60 comporte les instructions pour exécuter le procédé de la figure 3. Le calculateur 62 lit et exécute les instructions enregistrées sur le support 60. L'interface 64 permet d'échanger et de transférer des données par exemple en provenance du capteur 52. Par exemple, le calculateur 62 est un microprocesseur de la famille 8086 de la société INTEL®.

En outre, pour exercer le moment de freinage, le dispositif 20 est apte à commander au moins une des machines 36, 38, 46 et 48 conjointement à la commande de l'actionneur 50, pour augmenter la vitesse de rotation de l'une ou l'autre des roues 30, 32, 40, et 42. Par exemple, le dispositif 20 est raccordé au circuit 37 pour délivrer un signal de commande des machines 36, 38, 46 et 48.

Avantageusement, le dispositif 20 est en outre programmé pour, lorsqu'il détecte que le véhicule 4 est en tête du convoi 2, commander l'actionneur 50 pour qu'il bloque l'articulation 14 sur un angle θ égal à 0°, et laisser le conducteur du véhicule 4 libre d'actionner le dispositif de braquage de ce véhicule 4. Les parties 10 et 12 sont alors alignées l'une avec l'autre longitudinalement et ne peuvent pas pivoter l'une par rapport à l'autre autour de l'axe 19. Au contraire, si le dispositif 20 détecte que le véhicule auquel il appartient n'est pas en tête du convoi, alors il commande l'actionneur 50 pour ne pas bloquer l'articulation 14 et laisse cette articulation libre pour appliquer le moment en rotation.

Ici, le véhicule 4 comporte en outre des attelages avant et arrière 70 et 72. Chaque attelage 70, 72 est déplaçable en alternance entre des positions attelée et dételée, par exemple en réponse à un signal de commande d'un utilisateur du convoi 2. L'attelage 70 est apte à coopérer avec un attelage arrière, par exemple identique à l'attelage 72, installé à l'arrière d'un autre véhicule. A cet effet, les attelages 70 et 72 présentent des formes complémentaires l'une avec l'autre. Ici, les attelages 70 et 72 sont ancrés respectivement aux parties 10 et 12 sans degré de liberté en rotation en lacet.

Par rotation en lacet, on désigne ici un mouvement de rotation uniquement autour d'un axe perpendiculaire au plan 9.

Par exemple, les attelages 70 et 72 sont ceux décrits dans la demande internationale WO2O14/135310.

Ici, les véhicules 4, 6 et 8 sont attelés deux à deux au moyen des attelages 70 et 72 portés par ces véhicules respectifs. Par exemple, le véhicule 6 est attaché à l'arrière du véhicule 4 au moyen des attelages 72 et 70 des véhicules, respectivement, 4 et 6. Le véhicule 8 est attaché à l'arrière du véhicule 6.

Dans ce qui suit, pour faire référence aux éléments du véhicule 6, on utilise la même référence numérique que pour l'élément correspondant du véhicule 4 à laquelle on rajoute le suffixe « b ». Par exemple, l'articulation 14 du véhicule 6 porte la référence 14b. On procède de même pour le véhicule 8 avec le suffixe « c ».

Un exemple de fonctionnement d'un procédé pour amortir le mouvement de louvoiement du convoi 2 va maintenant être décrit, en référence à l'ordinogramme de la figure 3 et à l'aide des figures 1 et 2. Pour simplifier, ce procédé est décrit seulement en référence au véhicule 8 qui se trouve en queue du convoi 2. Cependant, tout ce qui est décrit en référence à ce véhicule 8 peut facilement être transposé au cas du véhicule 6.

Tout d'abord, lors d'une étape 100, le convoi 2 est formé en attachant les véhicules 4, 6 et 8 au moyen de leurs attelages 70 et 72 respectifs. Le dispositif 20 du véhicule 4 détecte que ce véhicule est en tête du convoi 2 et commande le blocage de l'articulation 14 dans la position où les axes longitudinaux des parties 10 et 12 sont alignés. Les dispositifs 20b et 20c détectent que les véhicules, respectivement, 6 et 8, ne sont pas en tête du convoi 2. Les articulations 14b et 14c sont alors libres de pivoter et autorisent un déplacement en rotation. Par contre, les dispositifs 20b et 20c inhibent l'actionnement des dispositifs de braquage des véhicules 6 et 8 par un conducteur de ces véhicules. Typiquement, l'angle de braquage des roues 30b, 32b, 30c et 32c est bloqué dans une position où l'axe de roulement de chacune de ces roues est parallèle à l'axe 34b ou 34c.

Ensuite, lors d'une étape 102, le convoi 2 est mis en mouvement et se déplace sur le plan 9, par exemple en ligne droite. Ici, le circuit 39 alimente les machines 36, 38, 46 et 48 pour fournir un couple destiné à mettre en rotation les roues 30, 32, 40 et 42 autour de leurs axes de rotation respectifs à une vitesse prédéterminée et dans un même sens. Il en va de même pour les véhicules 6 et 8.

Lors de ce déplacement, si le procédé décrit ici n'était pas mis en oeuvre, le convoi 2 pourrait présenter un mouvement de louvoiement. Par mouvement de louvoiement, on désigne un déplacement fluctuant dans le temps d'un ou plusieurs véhicules du convoi 2 selon une direction parallèle au plan 9 et essentiellement perpendiculaire à la direction de déplacement du convoi 2.

Par exemple, ce mouvement de louvoiement est déclenché suite à un braquage des roues 30 et 32 commandé par un utilisateur du véhicule 4. Il peut être aussi déclenché par du vent latéral, le dépassement par un autre véhicule ou une variation dans le dévers de la chaussée.

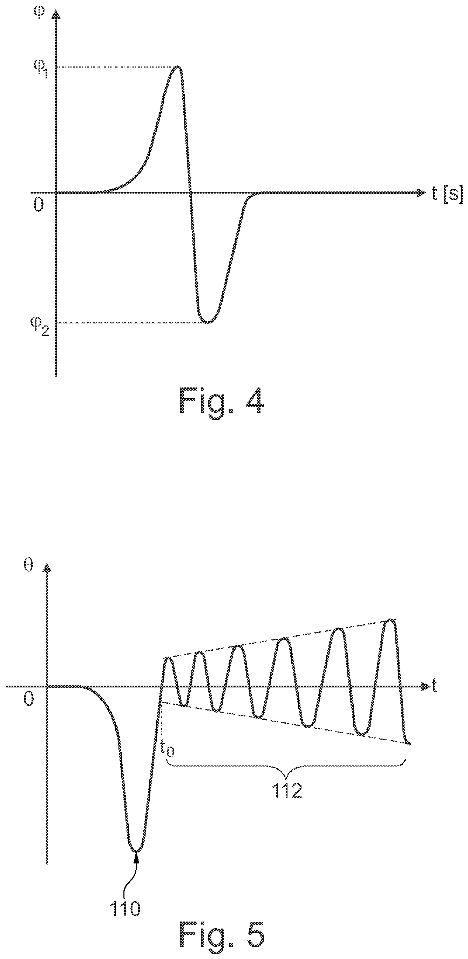

La figure 4 représente schématiquement l'évolution de l'angle $\varphi$ des roues 30 et 32 au cours du temps t. Ici, les roues 30 et 32 sont d'abord alignées et présentent un angle de braquage nul. Ensuite, elles sont braquées dans un sens avec un angle $\varphi_1$ puis, dans un second temps, sont braquées dans le sens opposé avec un angle $\varphi_2$ qui est égal à $-\varphi_1$. Enfin, l'angle $\varphi$ retrouve sa valeur initiale nulle. En réponse, un mouvement de louvoiement se propage sur les véhicules 6 et 8. Les parties avant et arrière de châssis des véhicules du convoi 2 pivotent l'une par rapport à l'autre autour de leurs articulations respectives avec un mouvement oscillatoire.

La figure 5 représente l'évolution de la valeur de l'angle $\theta$ de l'articulation 14c du véhicule 8 au cours du temps t, en réponse au braquage des roues 30 et 32 de la figure 4, lorsqu'aucune correction de trajectoire n'est appliquée. On observe un pic (flèche 110) qui correspond à la variation d'angle de braquage des roues 30 et 32. Puis, dans un second temps, à partir d'un instant to, on observe des oscillations de cette valeur de l'angle $\theta$ qui persistent après que ce braquage soit terminé (zone 112). Ces oscillations sont ici périodiques et présentent une forme sinusoïdale dont l'amplitude augmente linéairement avec le temps. Dans cette situation le louvoiement est incontrôlé et peut engendrer la perte de contrôle du convoi 2. Cette augmentation d'amplitude peut être amplifiée par la résonance du mouvement de louvoiement avec les suspensions du véhicule.

Pendant ce déplacement, lors d'une étape 104 (figure 3), le capteur 52c mesure cette oscillation des parties 10c et 12c autour de l'axe 19c.

Ensuite, lors d'une étape 116, les données mesurées sont analysées automatiquement par le dispositif 20c. Ce dernier calcule automatiquement, à partir des mesures du capteur 52c et d'une consigne $\theta_0$ pour la valeur de l'angle $\theta$ de l'articulation 14c, un moment total M d'amortissement en lacet autour de l'axe 19c qui doit être appliqué sur l'articulation 14c pour s'opposer à ces oscillations. Dans cette description, la valeur du moment total M est définie comme étant la projection sur l'axe vertical 19c, orienté vers le haut, du produit vectoriel suivant :

$$\overrightarrow{A_i P} \wedge \vec{F}$$

où P est le point d'application de la force, $A_i$ est la projection orthogonale du point P sur l'axe 19c et F la force appliquée.

Par exemple, la consigne $\theta_0$ est choisie comme étant égale à la valeur moyenne de l'angle $\theta$ moyenné sur une durée prédéfinie. Dans l'exemple considéré, la valeur moyenne est nulle. La valeur de consigne $\theta_0$ est donc égale à zéro.

Plus précisément, lors de l'étape 116, le dispositif 20c délivre automatiquement un signal de commande d'une part à l'actionneur 50c et d'autre part au circuit 37c de manière à atténuer, voire supprimer les oscillations. Ces signaux de commande, délivrés à l'actionneur 50c et au circuit 37c, sont fonction de l'écart entre la valeur de l'angle $\theta$ mesuré et la consigne $\theta_0$.

Par exemple, le dispositif 20c comporte un correcteur proportionnel de type PID qui reçoit en entrée la valeur de l'angle $\theta$ mesuré et la consigne $\theta_0$ puis qui fournit en sortie l'estimation du moment total M à appliquer sur l'articulation 14c pour atténuer les oscillations. De manière générale, la valeur du signal de commande croît ainsi d'autant plus que l'angle $\theta$ mesuré s'écarte de la consigne $\theta_0$. Dans cet exemple, les étapes 104 et 116 sont réitérées en temps réel, au fur et à mesure que les oscillations sont mesurées.

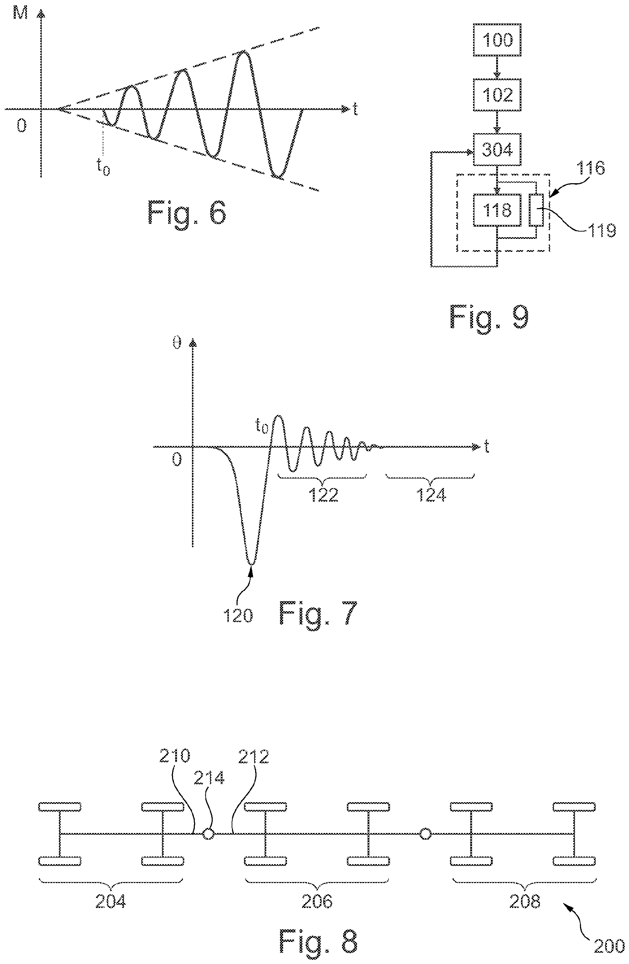

La figure 6 représente un exemple de la valeur du moment total M qui est calculé par le dispositif 20c. Le moment M est ici un signal périodique qui, à l'instar de l'évolution de la valeur de l'angle $\theta$ de la figure 5, présente une amplitude qui augmente linéairement en valeur absolue.

Ensuite, le dispositif 20c répartit automatiquement le moment total M entre :

- un moment MA qui doit être appliqué par l'actionneur 50c sur l'articulation 14c, et
- un moment MR qui doit être appliqué sur l'articulation 14c à l'aide des machines électriques du véhicule 8.

La somme des moments MA et MR est égale au moment total M. Typiquement, le moment MA est égal à X*M et le moment MR et égal à (1-X)*M, où X est un nombre réel compris entre zéro et un et M est la valeur calculée du moment total M. Le symbole « * » désigne l'opération mathématique de multiplication. En fonction des phases de l'oscillation, la répartition X du moment total entre l'actionneur 50c et les machines électriques du véhicule 8 est différente. Par exemple, lorsque la différence $|\theta - \theta_0|$ en valeur absolue, entre l'angle $\theta$ et la consigne $\theta_0$, augmente, X est typiquement, et généralement systématiquement, compris entre 0,2 et 1 ou entre 0,2 et 0,9 et, de préférence, entre 0,5 et 0,7. Ici, X est choisi égal à 0,5. Si la différence $|\theta - \theta_0|$ diminue, X est égal à zéro. A l'issue de cette répartition, un signal de commande est envoyé au circuit 37c pour commander les machines électriques du véhicule 8 de manière à appliquer le moment MR sur l'articulation 14c. En parallèle, un signal de commande est également envoyé à l'actionneur 50c pour appliquer le moment MA sur l'articulation 14c .

En réponse à ces signaux de commande, lors d'une opération 118, l'actionneur 50c applique le moment MA de freinage. Dans ce mode de réalisation, tant que la différence $|\theta - \theta_0|$ augmente, le moment MA appliqué est non nul. A l'inverse, quand la différence $|\theta - \theta_0|$ diminue, l'actionneur 50c exerce un moment MA de freinage dont l'amplitude est, typiquement, deux ou dix fois inférieure à l'amplitude du moment MA de freinage appliqué lorsque la différence $|\theta - \theta_0|$ augmente. De préférence, lorsque la différence $|\theta - \theta_0|$ diminue, l'amplitude du moment de freinage est nulle ou presque nulle. Ici, pour cela, le dispositif 20c commande l'électrovanne qui permet de régler le coefficient de frottement du vérin. Lorsque la différence $|\theta - \theta_0|$ augmente, le coefficient de frottement du vérin est réglé sur une valeur importante pour freiner cette augmentation. A l'inverse, lorsque la différence $|\theta - \theta_0|$ diminue, le coefficient de frottement du vérin est réglé sur une valeur dix ou cinquante fois plus faible. Ainsi, l'amplitude du moment MA appliqué par l'actionneur 50c présente une forme quasi-périodique, dont la période dépend de la période des oscillations 112.

Conjointement à cette application d'un moment de freinage par l'actionneur 50c, lors d'une opération 119, en réponse au signal de commande qui lui est destiné, le circuit 37c commande les machines électriques du véhicule 8 pour exercer le moment MR sur l'articulation 14c. Ce moment MR est de même signe et en phase avec l'angle $\theta$. A cet effet, dans ce mode de réalisation, le circuit 37c commande seulement les machines 46c et 48c. De plus, dans ce mode de réalisation, la commande d'une machine électrique consiste seulement à régler son couple pour augmenter la vitesse de rotation de la roue ou maintenir cette vitesse constante. Plus précisément, le circuit 37c commande au moins l'une des machines 46c et 48c de manière à provoquer une différence entre les vitesses de rotation des roues 40c et 42c. Cette différence entre les vitesses de rotations des roues 40c et 42c applique sur l'articulation 14c le moment MR.

Par exemple, dans le cas d'un angle $\theta$ tel que celui représenté sur la figure 2, en réponse au signal de commande reçu, le circuit 37c commande la machine 46c pour qu'elle maintienne constant le couple en rotation à la roue 40c, qui se trouve à l'intérieur du virage. La vitesse de rotation de la roue 40c est ainsi maintenue sensiblement constante. Parallèlement à cela, la machine 48c est commandé par le circuit 37c pour augmenter le couple qu'elle fournit à la roue 42c qui se trouve à l'extérieur du virage. Ainsi, la roue 42c accélère et sa vitesse de rotation augmente.

En parallèle, ici, le circuit 37c commande le couple des machines 36c et 38c pour maintenir constante les vitesses de rotation des roues 30 et 32. Cela facilite la commande pour appliquer le moment MR sur l'articulation 14c.

Les opérations 118 et 119 sont répétées, le cas échéant avec des valeurs de moment à appliquer différentes, jusqu'à ce que les oscillations de l'angle $\theta$ disparaissent. L'oscillation est dite disparaître si l'écart, en valeur absolue, entre la valeur de l'angle $\theta$ et la consigne $\theta_0$ est inférieur ou égal à $0,1*\theta_0$ ou à $0,05*\theta_0$.

En parallèle des étapes 104 et 116, l'actionneur 50b et les machines 46b et 48b du véhicule 6 sont commandés de façon similaire pour amortir les oscillations de l'angle de l'articulation 14b.

L'action conjuguée de l'actionneur 50c et des machines 46c, 48c conduit ainsi à appliquer à chaque instant donné le moment total M sur l'articulation 14c qui s'oppose aux oscillations de l'angle $\theta$. En supprimant les oscillations de chacun des véhicules 6 et 8, on supprime ainsi le mouvement de louvoiement du convoi 2.

L'opération 119, en complément de l'opération 118, permet d'exercer un moment d'amortissement en lacet sur toutes les phases de l'oscillation, et pas seulement pendant les périodes où la différence d'angles $|\theta - \theta_0|$ croit. Cela permet donc d'amortir plus rapidement ces oscillations. Par ailleurs l'utilisation simultanée de l'actionneur 50c et des machines électriques 46c, 48c permet de réduire les risques de perte de contrôle dans la mesure où, dans le cas le plus sévère ou l'adhérence serait perdue sur les deux roues, l'articulation peut toujours être contrôlée par l'actionneur 50c. De plus, ce procédé de commande élimine ou réduit très fortement le freinage du convoi et permet donc d'appliquer ce procédé de commande continûment sur des périodes beaucoup plus longues avant que cela ne conduise à l'arrêt du convoi où à une décélération perceptible du convoi. De même cela réduit l'usure des freins.

Dans le cas particulier où l'accélération de la vitesse de rotation de chaque roue est réglée pour annuler l'absence d'accélération de cette même roue lors d'une précédente itération de l'opération 119, alors la vitesse du convoi peut être maintenue constante tout en appliquant continûment le procédé de commande.

Enfin, en utilisant un vérin uniquement capable de freiner le déplacement en rotation des parties 10c et 12c autour de l'axe 19c, on limite la consommation d'énergie du véhicule. En effet, pour cela il suffit simplement de commander le coefficient de frottement de ce vérin. Cela consomme beaucoup moins d'énergie que s'il était nécessaire de déplacer les parties 10c et 12c l'une par rapport à l'autre à l'aide de ce vérin.

La figure 7 représente l'évolution de la valeur de l'angle $\theta$ de l'articulation 14c du véhicule 8 au cours du temps, en réponse au braquage des roues 30 et 32 représenté sur la figure 4, lorsque le procédé de la figure 3 est appliqué. On observe, comme précédemment, d'abord un pic 120 de la valeur de l'angle $\theta$, identique au pic 110 (figure 4). Puis, dans un second temps, on observe des oscillations (zone 122) qui sont rapidement atténuées. La valeur de l'angle $\theta$ tend enfin vers une valeur constante (zone 114) qui correspond à la valeur de consigne $\theta_0$.

La figure 8 illustre un convoi 200 apte à remplacer le convoi 2. Dans ce convoi 200, contrairement au convoi 2, les véhicules ne sont pas articulés, mais chaque attelage comporte une articulation. Ainsi, le véhicule 4 est remplacé par un véhicule 204 qui ne comporte pas l'articulation 14. De même, les véhicules 6 et 8 sont remplacés par des véhicules 206 et 208, par exemple identiques aux véhicule 204. Les parties 10 et 12 d'un même véhicule ne sont pas articulées entre elles et ne peuvent alors pas se déplacer en rotation l'une par rapport à l'autre dans un fonctionnement normal du convoi. Dans ce mode de réalisation, les attelages 70 et 72 sont remplacés par des attelages 210 et 212 qui, lorsqu'ils sont attelés l'un à l'autre, autorisent une rotation en lacet autour d'un axe perpendiculaire au plan de roulement du convoi. Ces attelages 210 et 212 forment alors une articulation 214 qui joue le même rôle que l'articulation 14. Cette articulation 214 est par exemple identique à l'articulation 14. Tout ce qui a été décrit en référence à cette articulation 14 et au mouvement de rotation des parties 10 et 12 l'une par rapport à l'autre s'applique à cette articulation 214 et à la rotation des parties de châssis reliées directement entre elles par ces attelages 210 et 212. En particulier, l'actionneur 50 relie alors directement entre eux les châssis des véhicules attelés entre eux. Le dispositif 20 peut alors être placé sur l'un ou l'autre des véhicules qui sont attachés entre eux au moyen de ces attelages. Le procédé de commande de l'actionneur 50 et des machines électriques logées dans les roues pour éviter le louvoiement du convoi est alors identique à celui de la figure 3.

La figure 9 est un ordinogramme d'un procédé apte à remplacer le procédé de la figure 3. Dans ce procédé, l'étape 104 est remplacée par une étape 304 dans laquelle la consigne $\theta_0$ est déterminée différemment. Cette consigne $\theta_0$ est ici déterminée à partir du calcul de la trajectoire cinématique suivie par le véhicule 4.

Une façon de déterminer cette trajectoire est par exemple de mesurer une grandeur représentative du rayon de braquage du véhicule 4 pendant le déplacement de ce véhicule 4. Cette grandeur représentative est par exemple l'angle $\varphi$. A partir de cette valeur, la consigne $\theta_0$ de chaque véhicule suiveur 6 et 8 du convoi 2 est déterminée de proche en proche à l'aide de la formule suivante : $\theta_0 = \theta_{ar} - \theta_{av}$, où :

- $\theta_{ar}$ est l'angle entre l'axe longitudinal de la partie 12 et un axe d'un repère R fixe de l'espace,
- $\theta_{av}$ est l'angle entre l'axe longitudinal de la partie 10 et ce même axe du repère R.

Pour le véhicule 4, en tête du convoi, l'articulation 14 du véhicule 4 est bloquée. Dans ces conditions, les coordonnées $X_s$, $Y_s$ du centre du train arrière 18, c'est-à-dire du milieu de l'axe 44, en fonction des coordonnées X, Y du centre du train avant 16, sont données par les relations suivantes :

$$X_s = X - L\cos(\theta_{ar}) \quad \quad Y_s = Y - L\sin(\theta_{ar})$$

où :

- L est l'empattement du véhicule 4, défini comme étant la distance, mesurée selon l'axe longitudinal du véhicule, entre les axes 34 et 44 ;

La valeur de l'anlge $\theta_{ar}$ du véhicule 4 est déterminée en résolvant le système d'équations différentielles suivant, par exemple au moyen du dispositif 20b :

$$\theta_{ar} = \frac{\int \left[\dot{Y}\cos(\theta_{ar}) - \dot{X}\sin(\theta_{ar})\right]dt}{L}$$
$$\dot{X} = V\cos(\theta_{av})$$
$$\dot{Y} = V\sin(\theta_{av})$$
$$\theta_{av} = \theta_{ar} - \varphi$$

où V est la vitesse du véhicule 4.

Pour les véhicules suiveurs 6 et 8, les coordonnées $X_s$, $Y_s$ du centre du train arrière 18 en fonction des coordonnées X, Y du centre du train avant 16, sont données par les relations suivantes :

$$X_s = X - l_1\cos(\theta_{av}) - l_2\cos(\theta_{ar}) \quad \quad Y_s = Y - l_1\sin(\theta_{av}) - l_2\sin(\theta_{ar})$$

où :

- $l_1$ est la distance entre l'axe 19 et le centre du train avant 16, et
- $l_2$ est la distance entre l'axe 19 et le centre du train arrière 18 de sorte que $l_1 + l_2 = L$.

Pour les véhicules suiveurs, les coordonnées X, Y du centre du train avant sont égales aux coordonnées $X_s$, $Y_s$ du centre du train arrière auquel le véhicule suiveur est attelé. De plus, puisque les attelages 70 et 72 n'autorisent ici aucun degré de liberté en rotation en lacet, l'angle $\theta_{av}$ du véhicule suiveur et égale à l'angle $\theta_{ar}$ du véhicule à l'arrière duquel il est attelé.

La valeur de l'angle $\theta_{ar}$ du véhicule suiveur est déterminée en résolvant le système d'équations différentielles suivant, par exemple au moyen du dispositif 20b :

$$\theta_{ar} = \frac{1}{l_2} \int \dot{Y} \cos(\theta_{ar}) - l_1 \dot{\theta}_{av} \cos(\theta_{av}) \cos(\theta_{ar}) - \dot{X} \sin(\theta_{ar}) - l_1 \dot{\theta}_{av} \sin(\theta_{av}) \sin(\theta_{ar}) \, dt$$

$$X = V \cos(\theta_{av})$$

$$Y = V \sin(\theta_{av})$$

où V est la vitesse du véhicule 4.

Ainsi, en partant du véhicule 4 de tête et en allant vers le véhicule 8 de queue, le dispositif 20 peut calculer de proche en proche les angles $\theta_{av}$ et $\theta_{ar}$ de chaque véhicule suiveur. Ensuite, la consigne $\theta_0$ de chaque véhicule suiveur est calculée à l'aide de la relation suivante :

$$\theta_0 = \theta_{ar} - \theta_{av}$$

De nombreux autres modes de réalisation sont possibles. Par exemple, le convoi 2 est différent. Il peut comporter un nombre de véhicules différents. Les véhicules 4, 6 et 8 peuvent être différents les uns des autres.

L'articulation 14 peut être différente de celle décrite. En variante, le blocage de l'articulation 14 est omis pour le véhicule 4. Dans ce cas, la consigne $\theta_0$ du véhicule 4 est calculée comme décrit pour les véhicules suiveurs.

Le dispositif 20 peut être réalisé différemment. En variante, le calcul du moment total M à appliquer est réalisé par un seul des dispositifs 20, 20b et 20c. Ce dernier transmet alors à chacun de ces autres dispositifs la valeur du moment à appliquer sur l'articulation correspondante. Les dispositifs 20, 20b et 20c peuvent à cet effet être raccordés ensemble par une liaison d'échange de données.

Le dispositif de braquage des roues 30 et 32 peut être différent. Il peut s'agir d'un dispositif de direction de type Ackermann (« Ackermann steering » en langue anglaise).

Les machines 36, 38, 46, 48 peuvent être différents. Par exemple, en variante, on utilise des machines électriques asynchrones ou des machines à aimants permanents. En variante, seul un des trains 16 et 18 comporte des machines électriques pour entraîner en rotation les roues de ce train. Ainsi, en variante il peut n'y avoir que les machines 46 et 48, ou que les machines 36 et 38.

Le nombre de roues portées par les trains 16 et 18 peut être différent. Par exemple, le train 16 comporte deux roues gauche et deux roues droite, jumelées par paire.

Le nombre de trains de roues montés directement sur la même partie avant ou arrière du châssis peut aussi être supérieur à un. Par exemple, sur une même partie du châssis, il peut y avoir deux trains de roues montés en tandem. Dans ce cas, le procédé précédemment décrit s'applique à un seul de ces trains de roues ou, simultanément, à plusieurs des trains de roues montés sur la même partie du châssis.

La façon de calculer le moment total M à appliquer peut être différente. Par exemple, le dispositif 20 peut prendre en compte, comme paramètre d'entrée pour ce calcul, des conditions environnementales telles que l'adhérence de la chaussée ou bien des propriétés dynamiques du convoi 2 comme le nombre de véhicules ou bien la masse de ces véhicules. Le dispositif 20 peut aussi prendre en compte les mesures de capteurs inertiels fixés sur chacun des véhicules, d'un dispositif de détermination de trajectoire, d'un accéléromètre qui mesure l'accélération transversale du véhicule ou encore d'un capteur de la vitesse angulaire de lacet de l'articulation. L'étape 104 est alors modifiée en conséquence.

Pour mesurer les oscillations, il n'est pas nécessaire de mesurer directement les oscillations de l'angle $\theta$. En fait, il suffit de mesurer des grandeurs physiques représentatives de ces oscillations. Par exemple, le capteur 52 est remplacé par un ou des capteurs qui mesurent indirectement ces oscillations. Typiquement, le capteur 52 peut être remplacé par un capteur qui mesure la vitesse angulaire en lacet de la partie de châssis concernée ou la dérivée temporelle de l'angle $\theta$. La consigne d'angle $\theta_0$ est alors remplacée par une consigne de vitesse angulaire en lacet de la partie de châssis concernée ou par une consigne de dérivée temporelle de l'angle $\theta$.

Le mouvement d'oscillation de l'angle $\theta$ autour de l'articulation d'un véhicule peut être mesuré différemment.

Par exemple, il est mesuré à partir de la vitesse de rotation des roues du véhicule, ou de l'accélération latérale du véhicule, séparément ou en conjonction avec la mesure de l'angle par le capteur 52. Par exemple, ce calcul est réalisé comme décrit dans le brevet US6523911B1 en référence à la figure 9 de ce brevet. Le dispositif 20 et le capteur 52 sont alors adaptés en conséquence.

Le nombre X utilisé pour répartir automatiquement le moment total M entre les moments MA et MR, lorsque la différence $|\theta - \theta_0|$ en valeur absolue augmente, n'est pas nécessairement une constante indépendante du temps et des valeurs des angle $\theta$ et $\theta_0$. Par exemple, en variante, la valeur du nombre X varie en fonction de la différence $|\theta - \theta_0|$ lorsque cette différence augmente ou en fonction d'une durée $\delta t$ décomptée depuis l'instant où la différence $|\theta - \theta_0|$ a commencé à augmenter. La valeur du nombre X peut aussi varier en fonction d'autres paramètres ou caractéristiques du convoi automobile.

La façon d'appliquer le moment MR peut également être différente. Par exemple, lors de l'opération 119, le circuit 37c commande le couple des machines 46c et 48c pour accélérer à la fois la vitesse de rotation des roues 40c et 42c. Toutefois, l'accélération de l'une de ces roues est alors supérieure à l'accélération de l'autre de ces roues. Ainsi, le procédé de commande peut être mis en oeuvre tout en accélérant le convoi.

Dans un autre mode de réalisation, l'unité 37c commande seulement les machines 36c et 38c à la place des machines 46c et 48c pour exercer le moment MR. Enfin, l'unité de commande 37c peut aussi simultanément commander les machines 36c, 38c, 46c et 48c pour exercer ce moment MR.

Dans une autre variante, lors de l'opération 119, la machine 36 d'un véhicule suiveur est commandée simultanément à la machine 46 du véhicule qui le précède. De même la machine 38 d'un véhicule suiveur peut être commandée simultanément à la machine 48 du véhicule qui le précède.

Il est aussi possible de commander le moment MR engendré par les roues avec un déphasage par rapport à l'angle $\theta$. Ainsi le moment MR peut être en avance de phase de 0 à 90° par rapport à l'angle $\theta$. Il est aussi possible de commander l'application du moment MR engendré par les roues avec un retard de phase de 0 à 45° par rapport à l'angle $\theta$.

Il est aussi possible de commencer à appliquer le moment MA de freinage exercé par l'actionneur 50c lorsque la différence $|\theta - \theta_0|$ diminue et juste avant que la valeur de cette différence ne s'annule.

La manière de calculer et/ou d'appliquer le moment M n'est pas nécessairement la même pour tous les véhicules du convoi 2.

L'actionneur 50 peut être différent. En particulier, en variante, l'actionneur 50 est apte à fournir un travail pour déplacer les parties 10 et 12 l'une par rapport à l'autre en rotation autour de l'axe 19 pour atteindre une valeur d'angle $\theta$ donnée, en réponse à un signal de commande émis par le dispositif 20. Par exemple, l'actionneur 50 comporte un vérin hydraulique commandable dont les extrémités opposées sont ancrées respectivement aux parties 10 et 12 sans degré de liberté. Dans une autre variante, l'actionneur 50 n'est pas un vérin hydraulique mais un amortisseur magnétorhéologique.

Les oscillations de la valeur de l'angle $\theta$ peuvent présenter une forme différente de celle décrite. Par exemple, elles ne sont pas périodiques. Leur amplitude peut ne pas être modulée. Elle peuvent ne pas être continûment croissantes.

Les attelages 70 et 72 ne sont pas forcément commandables. Ils peuvent aussi être différents.

**En** variante, lors de l'étape 104 ou de l'étape 304, la consigne $\theta_0$ est déterminée différemment. Alternativement, lors de l'étape 304, la trajectoire est obtenue au moyen d'un dispositif de géolocalisation, par exemple le système GPS ("Global Positioning System" en langue anglaise).

Les freins mécaniques peuvent être omis.

Dans une autre variante, dans le cas d'un angle $\theta$ tel que celui représenté sur la figure 2, en réponse au signal de commande reçu, le circuit 37c commande la machine 46c pour qu'elle cesse de fournir un couple en rotation à la roue 40c qui se trouve à l'intérieur du virage et, à la place, exerce un freinage régénératif sur la roue 40c. La machine 46c fonctionne alors comme une génératrice d'électricité et convertit au moins une partie de l'énergie cinétique de rotation de la roue 40c en énergie électrique, qui est collectée et stockée dans le circuit 39c. Cela réduit la vitesse de rotation de la roue 40c. Avantageusement, parallèlement à cela, la machine 48c est commandée par le circuit 37c pour accélérer la vitesse de rotation de la roue 42c qui se trouve à l'extérieur du virage. Encore plus avantageusement, pour réaliser cette accélération, le circuit 39c alimente la machine 48c avec l'énergie générée par la machine 46c pendant le freinage régénératif. Lors de l'itération suivante de l'opération 119, la machine qui fonctionnait en tant que génératrice peut fonctionner en tant que moteur et vice versa. En outre, en utilisant simultanément un freinage régénératif sur une roue et une accélération sur une autre roue, la tenue de route du véhicule 8 est améliorée. En effet, la force du freinage exercée par la roue pour obtenir le même moment d'amortissement en lacet est alors plus petite, ce qui réduit le risque de perte d'adhérence par rapport au cas où le freinage n'est appliqué que sur une seule des roues. Dans un autre mode de réalisation, c'est l'accélération de la roue 42c qui est omise lors de l'opération 119. L'accélération de la roue 42c peut aussi être réalisée sans utiliser l'énergie générée par la machine 46c. Selon une autre variante, l'accélération de la roue 42c peut être réalisée en consommant immédiatement l'énergie générée par la machine 46c sans que celle-ci ne soit stockée dans le circuit 39. Avantageusement, lorsque le couple maximum de freinage que peut exercer l'une des machines électriques par freinage régénératif est atteint, le freinage régénératif est alors complété par un freinage dissipatif réalisé au moyen des freins mécaniques. Ce freinage dissipatif peut être rendu nécessaire, par exemple dans des situations d'urgence, lorsque la valeur de l'angle $\theta$ s'écarte trop de la valeur de consigne $\theta_0$ et doit être corrigée rapidement et que l'actionneur 50c n'est pas en mesure de réaliser cette correction.

La manière de réaliser le freinage régénératif d'une machine peut être différente. De façon générale, l'homme du métier sait qu'elle dépend de la nature de la machine électrique utilisée et du circuit 37.

## Revendications

1. Procédé de commande d'un convoi automobile routier (2), comportant :

- un premier véhicule automobile routier (4), situé en tête du convoi et équipé d'un train de roues,
- une pluralité de seconds véhicules automobiles routiers (6, 8), attelés deux à deux l'un derrière l'autre, l'un des seconds véhicules étant attelé à l'arrière du premier véhicule, chaque second véhicule comportant :

- un train de roues ;
- une articulation autorisant un déplacement en rotation d'au moins une partie du châssis de ce second véhicule par rapport à au moins une partie du châssis du véhicule qui le précède, autour d'un axe de rotation perpendiculaire au plan de roulement du convoi ;
- pour chaque articulation, un actionneur commandable qui raccorde mécaniquement lesdites parties de châssis qui pivotent l'une par rapport à l'autre autour de l'axe de rotation de cette articulation, cet actionneur étant apte à exercer un moment réglable sur cette articulation ;
- le procédé comportant, pour chaque articulation :

a) la mesure (104) d'oscillations de l'angle ($\theta$) d'articulation autour d'une consigne d'angle d'articulation ($\theta_0$) ;
b) l'application (116), sur cette articulation, d'un moment dont l'amplitude varie en fonction des oscillations mesurées pour amortir les oscillations mesurées, le moment étant appliqué sur l'articulation en commandant l'actionneur de cette articulation,

**caractérisé en ce que** :
- ce procédé comporte aussi la fourniture (100), pour chaque roue du train de roues de chaque véhicule, d'une machine électrique commandable pour entraîner cette roue en rotation de manière à propulser ledit véhicule, chacun desdites machines d'un même train de roues étant commandable indépendamment du ou des autres machines de ce train de roues ;
- et, lors de l'étape b), pour chaque articulation, l'application (116) du moment comporte, conjointement à la commande de l'actionneur de cette articulation, la commande :

• de la machine électrique d'une première roue d'un des trains de roues qui appartient à une desdites parties de châssis qui pivotent l'une par rapport à l'autre grâce à cette articulation, de manière à augmenter le couple de cette première roue, et simultanément
• de la machine électrique d'une seconde roue du même train de roues pour maintenir son couple constant ou augmenter le couple de cette seconde roue moins que le couple de la première roue de manière à appliquer sur cette articulation, en combinaison avec l'actionneur, ledit moment.

2. Procédé selon la revendication 1, dans lequel lors de l'étape b) :

- la machine électrique de la première roue est commandée pour augmenter sa vitesse de rotation plus rapidement que la vitesse de rotation de la seconde roue, et simultanément
- la machine électrique de la seconde roue est commandée pour maintenir une accélération de sa vitesse de rotation nulle.

3. Procédé selon la revendication 1 ou 2, dans lequel, lors de l'étape b), aucune des machines électriques du convoi n'est commandée pour fonctionner en tant que génératrice d'électricité.

4. Procédé selon l'une quelconque des revendications précédentes, dans lequel le procédé comporte :

- la répartition automatique du moment pour amortir les oscillations mesurées entre :

• un moment MA égal à X*M qui doit être appliqué par l'actionneur sur l'articulation, et

• un moment MR égal à (1-X)*M qui doit être appliqué sur l'articulation à l'aide des machines électriques, où M est le moment total à appliquer sur l'articulation pour amortir les oscillations et X est un nombre réel qui est compris entre 0,2 et 1 lorsque la différence $|\theta - \theta_0|$ en valeur absolue augmente et qui est égal à zéro lorsque la différence $|\theta - \theta_0|$ diminue, où $\theta$ est l'angle de l'articulation et $\theta_0$ est la consigne d'angle d'articulation, puis

- l'application (116) du moment MA sur l'articulation en commandant l'actionneur et, conjointement, l'application du moment MR sur l'articulation en commandant les machines électriques.

5. Procédé selon la revendication 4, dans lequel le nombre réel X est systématiquement compris entre 0,2 et 0,9 lorsque la différence $|\theta - \theta_0|$ en valeur absolue augmente.

6. Procédé selon l'une quelconque des revendications précédentes, dans lequel :

- ce procédé comporte en outre l'acquisition automatique (304) de la trajectoire suivie par le premier véhicule du convoi routier, et
- lors de l'étape b), la consigne d'angle de chaque articulation est calculée en fonction de la trajectoire acquise.

7. Procédé selon la revendication 6, dans lequel ladite trajectoire est acquise (304) en mesurant une grandeur représentative du rayon de braquage du premier véhicule.

8. Procédé selon l'une quelconque des revendications précédentes, dans lequel l'étape a) comporte le calcul (104) de la consigne d'angle pour cette articulation puis l'étape b) comporte l'asservissement (116) de l'actionneur de cette articulation sur la consigne d'angle calculée.

9. Procédé selon l'une quelconque des revendications 1 à 8, dans lequel l'actionneur (50) est un vérin à coefficient d'amortissement commandable capable de freiner la rotation des parties de châssis qu'il raccorde mécaniquement entre elles et incapable de déplacer en rotation l'une par rapport à l'autre ces mêmes parties de châssis.

10. Support d'enregistrement d'informations (60), **caractérisé en ce qu'**il comporte des instructions pour la mise en oeuvre des étapes a) et b) conformes à l'une quelconque des revendications 1 à 9 lorsque ces instructions sont exécutées par un calculateur électronique.

11. Convoi automobile routier (2), comportant :

- un premier véhicule automobile routier (4) situé en tête du convoi,
- une pluralité de seconds véhicules automobiles (6, 8) routiers, attelés deux à deux l'un derrière l'autre, l'un des seconds véhicules étant attelé à l'arrière du premier véhicule, chaque second véhicule comportant une articulation (14) autorisant un déplacement en rotation d'au moins une partie du châssis de ce second véhicule par rapport à au moins une partie du châssis du véhicule qui le précède, autour d'un axe de rotation (19) perpendiculaire au plan de roulement (9) du convoi ;
- chacun des premier et seconds véhicules comportant un train de roues (16, 18) ;
- pour chaque articulation du convoi :

• un actionneur commandable (50), qui raccorde mécaniquement entre ses extrémités lesdites parties de châssis qui pivotent l'une par rapport à l'autre autour de l'axe de rotation de cette articulation, cet actionneur étant apte à exercer un moment réglable sur l'articulation ;
• un capteur (52), apte à mesurer des oscillations de l'angle de cette articulation autour d'une consigne d'angle d'articulation, et
• un dispositif de commande (20) apte à commander l'actionneur de cette articulation, pour exercer un moment sur cette articulation dont l'amplitude varie en fonction des oscillations mesurées pour amortir les oscillations mesurées ;

**caractérisé en ce que** :

- chaque roue (30, 32) de chaque train de roues est munie d'une machine électrique (36, 38) commandable pour entraîner cette roue en rotation de manière à propulser ledit véhicule, chacune desdites machines d'un même train de roues étant commandable indépendamment du ou des autres machines de ce train de roues, et
- pour chaque articulation, le dispositif de commande est également apte, pour appliquer ledit moment, conjointement à la commande de l'actionneur de cette articulation, à commander :

• la machine électrique (36) d'une première roue d'un des trains de roues qui appartient à une desdites parties de châssis qui pivotent l'une par rapport à l'autre grâce à cette articulation, de manière à augmenter le couple de cette première roue, et simultanément
• la machine électrique d'une seconde roue du même train de roues pour maintenir son couple constant ou augmenter le couple de cette seconde roue moins que le couple de la première roue de manière à appliquer sur cette articulation, en combinaison avec l'actionneur, ledit moment.

12. Convoi selon la revendication 11, dans lequel :

- le premier et les seconds véhicules sont identiques et chacun de ces véhicules comporte :

• des parties avant et arrière de châssis (10, 12), comportant chacune un train de roues du véhicule ;
• ladite articulation (14), cette articulation étant ainsi apte à faire pivoter lesdites parties avant et arrière de ce véhicule l'une par rapport à l'autre autour de son axe de rotation ;
• un dispositif de braquage pour braquer le train de roues de la partie avant ;

- le dispositif de commande est programmé pour :

• lorsqu'il détecte qu'il est situé dans le premier véhicule, commander l'actionneur de l'articulation de ce premier véhicule de manière à bloquer l'articulation du premier véhicule dans une position où les parties avant et arrière du châssis de ce véhicule sont alignées tout au laissant un conducteur du premier véhicule libre d'actionner le dispositif de braquage du premier véhicule, et
• lorsqu'il détecte qu'il est situé dans un des seconds véhicules, commander l'actionneur de l'articulation pour amortir les oscillations mesurées et inhiber l'actionnement du dispositif de braquage par le conducteur de ce second véhicule.

13. Convoi selon l'une quelconque des revendications 11 à 12, dans lequel le dispositif de commande est programmé pour :

- répartir automatiquement le moment pour amortir les oscillations mesurées entre :

• un moment MA égal à X*M qui doit être appliqué par l'actionneur sur l'articulation, et
• un moment MR égal à (1-X)*M qui doit être appliqué sur l'articulation à l'aide des machines électriques, où M est le moment total à appliquer sur l'articulation pour amortir les oscillations et X est un nombre réel qui est compris entre 0,2 et 1 lorsque la différence $|\theta - \theta_0|$ en valeur absolue augmente et qui est égal à zéro lorsque la différence $|\theta - \theta_0|$ diminue, où $\theta$ est l'angle de l'articulation et $\theta_0$ est la consigne d'angle d'articulation, puis

- appliquer le moment MA sur l'articulation en commandant l'actionneur et, conjointement, appliquer le moment MR sur l'articulation en commandant les machines électriques.

14. Convoi selon la revendication 13, dans lequel le dispositif de commande est programmé pour que le nombre réel X soit systématiquement compris entre 0,2 et 0,9 lorsque la différence $|\theta - \theta_0|$ en valeur absolue augmente.

15. Convoi selon l'une quelconque des revendications 11 à 14, dans lequel l'actionneur (50) est un vérin à coefficient d'amortissement commandable capable de freiner la rotation des parties de châssis qu'il raccorde mécaniquement entre elles et incapable de déplacer en rotation l'une par rapport à l'autre ces mêmes parties de châssis.

**Patentansprüche**

1. Steuerungsverfahren für einen Straßenfahrzeugkonvoi (2), der umfasst:

- ein erstes Straßenkraftfahrzeug (4), das sich an der Spitze des Konvois befindet und mit einem Radsatz ausgestattet ist,
- eine Vielzahl von zweiten Straßenkraftfahrzeugen (6, 8), die zu zweien hintereinander gekuppelt sind, wobei das eine der zweiten Fahrzeuge an das Heck des ersten Fahrzeugs gekuppelt ist, wobei jedes zweite Fahrzeug umfasst:

- einen Radsatz;
- ein Gelenk, das eine Drehbewegung mindestens eines Teils des Fahrgestell dieses zweiten Fahrzeugs in Bezug auf mindestens einen Teil des Fahrgestell des vorausfahrenden Fahrzeugs um eine senkrecht zur Rollebene des Konvois verlaufende Drehachse zulässt;
- für jedes Gelenk einen steuerbaren Aktor, der die Fahrgestellteile, die in Bezug aufeinander um die Drehachse dieses Gelenks schwenken, mechanisch verbindet, wobei dieser Aktor geeignet ist, ein regelbares Moment auf dieses Gelenk auszuüben;
- wobei das Verfahren für jedes Gelenk umfasst:

a) das Messen (104) von Schwankungen des Gelenkwinkels ($\theta$) um einen Gelenkwinkelsollwert ($\theta_0$);
b) das Aufbringen (116) eines Moments, dessen Amplitude in Abhängigkeit von den gemessenen Schwankungen variiert, auf dieses Gelenk, um die gemessenen Schwankungen zu dämpfen, wobei das Moment auf das Gelenk aufgebracht wird, indem der Aktor dieses Gelenks gesteuert wird,

**dadurch gekennzeichnet, dass**:

- dieses Verfahren für jedes Rad des Radsatzes jedes Fahrzeugs auch die Bereitstellung (100) einer steuerbaren elektrischen Maschine umfasst, um dieses Rad derart drehanzutreiben, dass das Fahrzeug angetrieben wird, wobei jede der Maschinen desselben Radsatzes unabhängig von der oder den anderen Maschinen dieses Radsatzes steuerbar ist;
- und während des Schritts b) das Aufbringen (116) des Moments bei jedem Gelenk, gemeinsam mit der Steuerung des Aktors dieses Gelenks die Steuerung umfasst:

• der elektrischen Maschine eines ersten Rades eines der Radsätze, das zu einem der Fahrgestellteile gehört, die dank dieses Gelenks in Bezug aufeinander schwenken, so dass das Drehmoment dieses ersten Rades erhöht wird, und gleichzeitig
• der elektrischen Maschine eines zweiten Rades desselben Radsatzes, um sein Drehmoment konstant zu halten oder das Drehmoment dieses zweiten Rades weniger stark als das Drehmoment des ersten Rades zu erhöhen, so dass auf dieses Gelenk in Kombination mit dem Aktor das Moment aufgebracht wird.

2. Verfahren nach Anspruch 1, wobei während des Schritts b):

- die elektrische Maschine des ersten Rades gesteuert wird, um ihre Drehzahl schneller als die Drehzahl des zweiten Rades zu erhöhen, und gleichzeitig
- die elektrische Maschine des zweiten Rades gesteuert wird, um eine Beschleunigung seiner Drehzahl von null beizubehalten.

3. Verfahren nach Anspruch 1 oder 2, wobei während des Schritts b) keine der elektrischen Maschinen des Konvois gesteuert wird, um als Stromerzeuger zu arbeiten.

4. Verfahren nach einem der vorhergehenden Ansprüche, wobei das Verfahren umfasst:

- die automatische Aufteilung des Moments zum Dämpfen der gemessenen Schwankungen auf:

• ein Moment MA gleich X*M, das vom Aktor auf das Gelenk aufgebracht werden muss, und
• ein Moment MR gleich (1-X)*M, das auf das Gelenk mithilfe der elektrischen Maschinen aufgebracht werden muss, wobei M das Gesamtmoment ist, das zum Dämpfen der Schwankungen auf das Gelenk aufzubringen ist, und X eine reelle Zahl ist, die zwischen 0,2 und 1 liegt, wenn die Differenz $|\theta - \theta_0|$ als Absolutwert zunimmt, und die gleich null ist, wenn die Differenz $|\theta - \theta_0|$ abnimmt, wobei $\theta$ der Winkel des Gelenks ist und $\theta_0$ der Gelenkwinkelsollwert ist, dann

- das Aufbringen (116) des Moments MA auf das Gelenk, indem das Aktor gesteuert wird, und gemeinsam damit das Aufbringen des Moments MR auf das Gelenk, indem die elektrischen Maschinen gesteuert werden.

5. Verfahren nach Anspruch 4, wobei die reelle Zahl X systematisch zwischen 0,2 und 0,9 liegt, wenn die Differenz |θ - θ₀| als Absolutwert zunimmt.

6. Verfahren nach einem der vorhergehenden Ansprüche, wobei:

- dieses Verfahren ferner die automatische Erfassung (304) der Bahn umfasst, der das erste Fahrzeug des Straßenkonvois folgt, und
- während des Schritts b) der Winkelsollwert jedes Gelenks in Abhängigkeit von der erfassten Bahn berechnet wird.

7. Verfahren nach Anspruch 6, wobei die Bahn erfasst (304) wird, indem eine für den Wendekreis des ersten Fahrzeugs repräsentative Größe gemessen wird.

8. Verfahren nach einem der vorhergehenden Ansprüche, wobei der Schritt a) das Berechnen (104) des Winkelsollwerts für dieses Gelenk umfasst, dann der Schritt b) das Regeln (116) des Aktors dieses Gelenks auf den berechneten Winkelsollwert umfasst.

9. Verfahren nach einem der Ansprüche 1 bis 8, wobei der Aktor (50) ein Zylinder mit steuerbarem Dämpfungskoeffizienten ist, der in der Lage ist, die Drehung der Fahrgestellteile, die er mechanisch untereinander verbindet, zu bremsen, und nicht in der Lage ist, dieselben Fahrgestellteile in Bezug aufeinander drehzubewegen.

10. Datenspeichermedium (60), **dadurch gekennzeichnet, dass** es Befehle umfasst, die bei der Ausführung dieser Befehle durch einen elektronischen Rechner die Schritte a) und b) nach einem der Ansprüche 1 bis 9 ausführen.

11. Straßenfahrzeugkonvoi (2), umfassend:

- ein erstes Straßenkraftfahrzeug (4) das sich an der Spitze des Konvois befindet,
- eine Vielzahl von zweiten Straßenkraftfahrzeugen (6, 8), die zu zweien hintereinander gekuppelt sind, wobei das eine der zweiten Fahrzeuge an das Heck des ersten Fahrzeugs gekuppelt ist, wobei jedes zweite Fahrzeug ein Gelenk (14) umfasst, das eine Drehbewegung mindestens eines Teils des Fahrgestells dieses zweiten Fahrzeugs in Bezug auf mindestens einen Teil des Fahrgestells des vorausfahrenden Fahrzeugs um eine senkrecht zur Rollebene (9) des Konvois verlaufende Drehachse (19) zulässt;
- wobei jedes der ersten und zweiten Fahrzeuge einen Radsatz (16, 18) umfasst;
- für jedes Gelenk des Konvois:

• einen steuerbaren Aktor (50), der mechanisch zwischen seinen Enden die Fahrgestellteile verbindet, die in Bezug aufeinander um die Drehachse dieses Gelenks schwenken, wobei dieser Aktor geeignet ist, ein regelbares Moment auf das Gelenk auszuüben;
• einen Sensor (52), der geeignet ist, Schwankungen des Winkels dieses Gelenks um einen Gelenkwinkelsollwert zu messen, und
• eine Steuerungsvorrichtung (20), die geeignet ist, den Aktor dieses Gelenks zu steuern, um ein Moment auf dieses Gelenk auszuüben, dessen Amplitude in Abhängigkeit von den gemessenen Schwankungen variiert, um die gemessenen Schwankungen zu dämpfen;

**dadurch gekennzeichnet, dass**:

- jedes Rad (30, 32) jedes Radsatzes mit einer steuerbaren elektrischen Maschine (36, 38) versehen ist, um dieses Rad derart drehanzutreiben, dass das Fahrzeug angetrieben wird, wobei jede der Maschinen desselben Radsatzes unabhängig von der oder den anderen Maschinen dieses Radsatzes steuerbar ist, und
- die Steuerungsvorrichtung bei jedem Gelenk auch geeignet ist, zum Aufbringen des Moments, gemeinsam mit der Steuerung des Aktors dieses Gelenks, zu steuern:

• die elektrische Maschine (36) eines ersten Rades eines der Radsätze, das zu einem der Fahrgestellteile gehört, die dank dieses Gelenks in Bezug aufeinander schwenken, so dass das Drehmoment dieses ersten Rades erhöht wird, und gleichzeitig
• die elektrische Maschine eines zweiten Rades desselben Radsatzes, um sein Drehmoment konstant zu halten oder das Drehmoment dieses zweiten Rades weniger stark als das Drehmoment des ersten Rades zu erhöhen, so dass auf dieses Gelenk in Kombination mit dem Aktor das Moment aufgebracht wird.

12. Konvoi nach Anspruch 11, wobei:

- das erste und die zweiten Fahrzeuge identisch sind und jedes dieser Fahrzeuge umfasst:

    • vordere und hintere Fahrgestellteile (10, 12), die jeweils einen Radsatz des Fahrzeugs umfassen;
    • das Gelenk (14), wobei dieses Gelenk somit geeignet ist, die vorderen und hinteren Teile dieses Fahrzeugs in Bezug aufeinander um seine Drehachse schwenken zu lassen;
    • eine Lenkvorrichtung, um den Radsatz des vorderen Teils zu lenken;

- wobei die Steuerungsvorrichtung dazu programmiert ist, um:

    • wenn sie feststellt, dass sie sich im ersten Fahrzeug befindet, den Aktor des Gelenks dieses ersten Fahrzeugs derart zu steuern, dass das Gelenk des ersten Fahrzeugs in einer Position blockiert wird, in der die vorderen und hinteren Teile des Fahrgestell dieses Fahrzeugs fluchten, wobei es einem Fahrer des ersten Fahrzeugs weiterhin frei steht, die Lenkvorrichtung des ersten Fahrzeugs zu betätigen, und
    • wenn sie feststellt, dass sie sich in einem der zweiten Fahrzeuge befindet, den Aktor des Gelenks zu steuern, um die gemessenen Schwankungen zu dämpfen und die Betätigung der Lenkvorrichtung durch den Fahrer dieses zweiten Fahrzeugs zu unterbinden.

13. Konvoi nach einem der Ansprüche 11 bis 12, wobei die Steuerungsvorrichtung dazu programmiert ist, um:

- das Moment zum Dämpfen der gemessenen Schwankungen automatisch aufzuteilen auf:

    • ein Moment MA gleich X*M, das vom Aktor auf das Gelenk aufgebracht werden muss, und
    • ein Moment MR gleich (1-X)*M, das auf das Gelenk mithilfe der elektrischen Maschinen aufgebracht werden muss, wobei M das Gesamtmoment ist, das zum Dämpfen der Schwankungen auf das Gelenk aufzubringen ist, und X eine reelle Zahl ist, die zwischen 0,2 und 1 liegt, wenn die Differenz $|\theta - \theta_0|$ als Absolutwert zunimmt, und die gleich null ist, wenn die Differenz $|\theta - \theta_0|$ abnimmt, wobei $\theta$ der Winkel des Gelenks ist und $\theta_0$ der Gelenkwinkelsollwert ist, dann

- das Moment MA auf das Gelenk aufzubringen, indem der Aktor gesteuert wird, und gemeinsam damit das Moment MR auf das Gelenk aufzubringen, indem die elektrischen Maschinen gesteuert werden.

14. Konvoi nach Anspruch 13, wobei die Steuerungsvorrichtung dazu programmiert ist, dass die reelle Zahl X systematisch zwischen 0,2 und 0,9 liegt, wenn die Differenz $|\theta - \theta_0|$ als Absolutwert zunimmt.

15. Konvoi nach einem der Ansprüche 11 bis 14, wobei der Aktor (50) ein Zylinder mit steuerbarem Dämpfungskoeffizienten ist, der in der Lage ist, die Drehung der Fahrgestellteile, die er mechanisch untereinander verbindet, zu bremsen, und nicht in der Lage ist, dieselben Fahrgestellteile in Bezug aufeinander drehzubewegen.

**Claims**

1. Method of controlling a road vehicle convoy (2), including:

    - a first road vehicle (4), situated at the head of the convoy and equipped with a wheel set,
    - a plurality of second road vehicles (6, 8), coupled two by two one behind the other, one of the second vehicles being coupled to the rear of the first vehicle, each second vehicle including:

        - a wheel set;
        - an articulation allowing movement in rotation of at least part of the chassis of this second vehicle relative to at least part of the chassis of the vehicle preceding it about a rotation axis perpendicular to the rolling plane of the convoy;
        - for each articulation, a controllable actuator that mechanically connects said chassis parts that pivot relative to one another about the rotation axis of this articulation, this actuator being able to exert an adjustable moment on this articulation;
- the method including, for each articulation:

a) measurement (104) of oscillations of the articulation angle ($\theta$) about an articulation angle setpoint ($\theta_0$);
b) application (116), to this articulation, of a moment the amplitude of which varies as a function of the measured oscillations to damp the measured oscillations, the moment being applied to the articulation by controlling the actuator of that articulation,

**characterized in that**:

- this method also includes, for each wheel of the wheel set of each vehicle, the provision (100) of a controllable electrical machine for driving this wheel in rotation so as to propel said vehicle, each of said machines of the same wheel set being controllable independently of the other machine or machines of that wheel set; and
- during the step b), for each articulation, the application (116) of the moment includes, conjointly with control of the actuator of that articulation, control of:

• the electrical machine of a first wheel of one of the wheel sets that belongs to one of said chassis parts that pivot relative to one another thanks to this articulation, so as to increase the torque of that first wheel, and simultaneously
• the electrical machine of a second wheel of the same wheel set to keep its torque constant or to increase the torque of this second wheel less than the torque of the first wheel so as to apply said moment to that articulation, in conjunction with the actuator.

2. Method according to Claim 1, in which, during the step b):

- the electrical machine of the first wheel is controlled to increase its rotation speed more rapidly than the rotation speed of the second wheel, and simultaneously
- the electrical machine of the second wheel is controlled to maintain a zero acceleration of its rotation speed.

3. Method according to Claim 1 or 2, in which, during the step b), none of the electrical machines of the convoy is controlled to operate as an electricity generator.

4. Method according to any one of the preceding claims, in which the method includes:

- the automatic division of the moment for damping the measured oscillations between:

• a moment MA equal to X*M that must be applied by the actuator to the articulation, and
• a moment MR equal to (1-X)*M that must be applied to the articulation with the aid of the electrical machines, where M is the total moment to be applied to the articulation to damp the oscillations and X is a real number between 0.2 and 1 inclusive when the absolute value of the difference $|\theta-\theta_0|$ increases, and is equal to zero when the difference $|\theta-\theta_0|$ decreases, where $\theta$ is the angle of the articulation and $\theta_0$ is the articulation angle setpoint, then

- application (116) of the moment MA to the articulation by controlling the actuator and, conjointly, application of the moment MR to the articulation by controlling the electrical machines.

5. Method according to Claim 4, in which the real number X is systematically between 0.2 and 0.9 inclusive when the absolute value of the difference $|\theta-\theta_0|$ increases.

6. Method according to any one of the preceding claims, in which:

- this method further includes the automatic acquisition (304) of the trajectory followed by the first vehicle of the road convoy, and
- during the step b), the angle setpoint of each articulation is calculated as a function of the acquired trajectory.

7. Method according to Claim 6, in which said trajectory is acquired (304) by measuring a magnitude representing the steering radius of the first vehicle.

8. Method according to any one of the preceding claims, in which the step a) includes the calculation (104) of the angle setpoint for this articulation and the step b) then includes the slaving (116) of the actuator of this articulation to the calculated angle setpoint.

9. Method according to any one of Claims 1 to 8, in which the actuator (50) is a cylinder with a controllable damping coefficient capable of braking the rotation of the chassis parts that it mechanically connects to one another and incapable of moving those same chassis parts in rotation relative to one another.

10. Information storage medium (60), **characterized in that** it contains instructions for the execution of the steps a) and b) according to any one of Claims 1 to 9 when those instructions are executed by an electronic computer.

11. Road vehicle convoy (2), including:

   - a first road vehicle (4), situated at the head of the convoy,
   - a plurality of second road vehicles (6, 8), coupled two by two one behind the other, one of the second vehicles being coupled to the rear of the first vehicle, each second vehicle including an articulation (14) allowing movement in rotation of at least part of the chassis of this second vehicle relative to at least part of the chassis of the vehicle preceding it about a rotation axis (19) perpendicular to the rolling plane (9) of the convoy;
   - each of the first and second vehicles including a wheel set (16,18);
   - for each articulation of the convoy:

      • a controllable actuator (50) that mechanically connects between its ends said chassis parts that pivot relative to one another about the rotation axis of this articulation, this actuator being able to exert an adjustable moment on the articulation;
      • a sensor (52) able to measure oscillations of the angle of this articulation about an articulation angle setpoint, and
      • a control device (20) able to control the actuator of this articulation so as to exert on this articulation a moment the amplitude of which varies as a function of the measured oscillations to damp the measured oscillations;

   **characterized in that**:

   - each wheel (30, 32) of each wheel set is provided with a controllable electrical machine (36, 38) for driving this wheel in rotation so as to propel said vehicle, each of said machines of the same wheel set being controllable independently of the other machine or machines of that wheel set, and
   - for each articulation, the control device is also able, to apply said moment, conjointly with control of the actuator of that articulation, to control:

      • the electrical machine (36) of a first wheel of one of the wheel sets that belongs to one of said chassis parts that pivot relative to one another thanks to this articulation, so as to increase the torque of that first wheel, and simultaneously
      • the electrical machine of a second wheel of the same wheel set to keep its torque constant or to increase the torque of this second wheel less than the torque of the first wheel so as to apply said moment to that articulation, in conjunction with the actuator.

12. Convoy according to Claim 11, in which:

   - the first and second vehicles are identical and each of these vehicles includes:

      « front and rear chassis parts (10, 12), each including a wheel set of the vehicle;

         • said articulation (14), this articulation thus being able to cause said front and rear parts of this vehicle to pivot relative to one another about its rotation axis;
         • a steering device for steering the wheel set of the front part;

   - the control device is programmed:

      • when it detects that it is situated in the first vehicle, to control the actuator of the articulation of that first vehicle so as to immobilize the articulation of the first vehicle in a position in which the front and rear parts of the chassis of that vehicle are aligned whilst leaving a driver of the first vehicle free to actuate the steering device of the first vehicle, and

• when it detects that it is situated in one of the second vehicles, to control the actuator of the articulation to damp the measured oscillations and to inhibit actuation of the steering device by the driver of this second vehicle.

13. Convoy according to either of Claims 11 and 12, in which the control device is programmed:

- to automatically divide the moment for damping the measured oscillations between:

• a moment MA equal to X*M that must be applied by the actuator to the articulation, and
• a moment MR equal to (1-X)*M that must be applied to the articulation with the aid of the electrical machines, where M is the total moment to be applied to the articulation to damp the oscillations and X is a real number between 0.2 and 1 inclusive when the absolute value of the difference $|\theta-\theta_0|$ increases, and is equal to zero when the difference $|\theta-\theta_0|$ decreases, where $\theta$ is the angle of the articulation and $\theta_0$ is the articulation angle setpoint, then

- to apply the moment MA to the articulation by controlling the actuator and, conjointly, to apply the moment MR to the articulation by controlling the electrical machines.

14. Convoy according to Claim 13, in which the control device is programmed so that the real number X is systematically between 0.2 and 0.9 inclusive when the absolute value of the difference $|\theta-\theta_0|$ increases.

15. Convoy according to any one of Claims 11 to 14, in which the actuator (50) is a cylinder with a controllable damping coefficient capable of braking the rotation of the chassis parts that it mechanically connects to one another and incapable of moving those same chassis parts in rotation relative to one another.

Fig. 1A

Fig. 1B

Fig. 2

Fig. 3

Fig. 4

Fig. 5

Fig. 6

Fig. 9

Fig. 7

Fig. 8

**EP 3 344 518 B1**

## RÉFÉRENCES CITÉES DANS LA DESCRIPTION

**Documents brevets cités dans la description**

- US 4688818 A1
- US 2013079980 A1
- US 2015051795 A1
- WO 2014135310 A
- US 4688818 A
- US 6523911 B1